# EUROPÄISCHE PATENTSCHRIFT

(11) **EP 1 137 139 B1**
(45) Veröffentlichungstag und Bekanntmachung des Hinweises auf die Patenterteilung: **16.07.2008**
(21) Anmeldenummer: 01105876.5
(22) Anmeldetag: 09.03.2001
(51) Int. Cl.: H02G 3/04, H02G 3/06, F16L 11/11

(54) **Hochflexibles Schlauchendstück**
Highly flexible endpiece of a protective sleeve
Partie terminale très flexible d'un tuyau protecteur

(30) Priorität: 24.03.2000 DE 20005551 U
(43) Veröffentlichungstag der Anmeldung: 26.09.2001
(73) Patentinhaber: KUKA Roboter GmbH, 86165 Augsburg (DE)
(72) Erfinder: Karlinger, Stefan, 86199 Augsburg (DE); Berninger, Alwin, 86153 Augsburg (DE)
(74) Vertreter: Lempert, Jost

(56) Entgegenhaltungen:
- EP-A- 0 865 130
- DE-U- 29 814 416
- FR-A- 638 417

## Beschreibung

Die Erfindung betrifft ein Schlauchendstück nach dem Oberbegriff des Anspruchs 1.

Bei mehrachsigen Robotern mit mehreren, relativ zueinander verschwenkbaren Teilen, insbesondere Roboterarmen, kommt es bei Bewegungen des Roboters zu Distanzänderungen der einzelnen Teile, was insbesondere bei zumindest teilweise außenseitig verlaufenden Schutzschläuchen zur Führung von Versorgungskabeln für Elemente und vornehmlich Werkzeuge des Roboters zu beachten ist. Diese müssen einerseits zur Aufnahme von Längenveränderungen in der Lage sein, andererseits bei Bewegungen des Roboters möglichst gering belastet werden, um eine hohe Standfestigkeit zu gewährleisten und eine vorzeitige Beschädigung zu verhindern. Insbesondere das im Bereich der in der Regel um drei Achsen verschwenkbaren Roboterhand angeordnete Ende des Schutzschlauchs unterliegt aufgrund extremer Bewegungen und Orientierungsänderungen der Roboterhand bzw. eines hieran festgelegten Werkzeugs starken Belastungen durch Zug-, Druck- und Biegebeanspruchung.

Um für die zur Aufnahme von Bewegungen der Roboterhand erforderliche Elastizität des Schutzschlauchs zu sorgen, ist es bekannt, diesen in Ausgleichsschlaufen entlang der Roboterhand bzw. eines hieran angelenkten Roboterarms zu führen. Da diese Ausgleichsschlaufen eine gewisse Formstabilität aufweisen müssen, besteht der Schutzschlauch aus einem relativ harten und folglich spröden Material, beispielsweise Polyamid (z. B. PA12), wobei seine Wandstärke wiederum eine gewisse Dicke nicht überschreiten darf, um die insbesondere im Bereich des Werkzeugs erforderliche Flexibilität zu gewährleisten. Dies führt häufig zu Ermüdungsbrüchen des Schutzschlauchs an seinem handseitigen Ende und dadurch bedingten Stillstandzeiten des Roboters.

Die DE 298 14 416 U1 zeigt einen flexiblen Rippenschlauch.

Die FR 638 417 zeigt ein weiches metallisches Schlauchelement mit Isolierung für elektrische Kabel. Das Schlauchelement weist an seinen Enden starre Gewindekupplungen auf. Das flexible Schlauchelement selbst ist als Wickelschlauch aus zwei profilierten Einzelteilen ausgebildet, die radial ineinander greifen.

Der Erfindung liegt die Aufgabe zugrunde, bei einem Roboter mit zumindest teilweise außenseitig verlaufenden Kabeln für eine verbesserte Kabelführung zu sorgen, die aufgrund einer hohen Elastizität die Beweglichkeit des Roboters nicht oder nur gering beeinträchtigt und insbesondere eine hohe Lebensdauer aufweist, um durch Versagen des Schutzschlauchs verursachte Stillstandzeiten des Roboters weitestgehend zu vermeiden.

Erfindungsgemäß wird diese Aufgabe mit einem Schlauchendstück der eingangs genannten Art gelöst, welches die kennzeichnenden Merkmale des Anspruchs 1 aufweist.

Durch die erfindungsgemäße Ausgestaltung wird erreicht, dass das flexible Schlauchendstück aufgrund seiner an beiden Enden größeren Wandstärke sowohl an den Schutzschlauch als auch an das Werkzeug gut ankuppelbar ist, während es gleichzeitig aufgrund seiner geringeren Wandstärke im Mittenbereich die erforderliche hohe Flexibilität garantiert, ohne dass seine Gesamtfestigkeit beeinträchtigt wird. Das flexible Schlauchendstück verleiht dem Schutzschlauch eine hohe Lebensdauer, indem es die Bewegungen der Roboterhand bzw. des Werkzeugs aufnimmt, und weist aufgrund der erfindungsgemäße Ausbildung selbst eine hohe Lebensdauer auf.

In bevorzugter Ausführung ist vorgesehen, dass die Wandstärke des Schlauchendstücks in seinem Anfangsbereich etwa der Wandstärke des Schutzschlauchs entspricht, wobei die Wandstärke des Schlauchendstücks in seinem Anfangsbereich insbesondere etwa der Wandstärke in seinem Endbereich entspricht. Dies verleiht dem flexiblen Schlauchendstück an seinen Enden eine insbesondere etwa der Steifigkeit des Schutzschlauchs entsprechende, erhöhte Steifigkeit, um es bestmöglich einerseits an den Schutzschlauch, andererseits z. B. an das Werkzeug des Roboters anzukuppeln.

Um ein Versagen des flexiblen Schlauchendstücks in unmittelbarer Nähe der endseitigen Verbindungsstellen zu verhindern, nimmt die Wandstärke des Schlauchendstücks von seinem Anfangsbereich zu seinem Mittenbereich vorzugsweise im wesentlichen kontinuierlich ab und von seinem Mittenbereich zu seinem Endbereich im wesentlichen kontinuierlich zu. Alternativ kann die Wandstärke des Schlauchendstücks von seinem Anfangsbereich zu seinem Mittenbereich auch schrittweise abnehmen und von seinem Mittenbereich zu seinem Endbereich schrittweise zunehmen, wobei in diesem Fall das Schlauchendstück beispielsweise aus aneinandergefügten Schlauchsegmenten mit unterschiedlicher Wandstärke bestehen kann.

Das Schlauchendstück weist zweckmäßig eine ring- oder wendelgewellte Wandung auf, die ihm in an sich bekannter Weise eine erhöhte Flexibilität verleiht. Die Wandung des Schlauchendstücks kann z. B. im wesentlichen rechteck-, sinus- oder sägezahnförmig gewellt sein.

Bei einer solchen Ausgestaltung des Schlauchendstücks ist vorzugsweise vorgesehen, dass sich seine Wandstärke vornehmlich in den im wesentlichen axial angeordneten Wandabschnitten ändert, während sie in den im wesentlichen radial angeordneten Wandabschnitten im wesentlichen konstant bleibt. Überraschenderweise wurde gefunden, dass eine solche, sich abschnittsweise ändernde Wandstärke des Schlauchendstücks einer sich kontinuierlich ändernden Wandstärke etwa entsprechende Elastizitätseigenschaften bewirkt und insbesondere die Flexibilität des Schlauchendstücks nicht oder nur gering beeinträchtigt. Dies ermöglicht z. B. eine einfache Herstellung des erfindungsgemäßen Schlauchendstücks durch Extrusion, da sich bei einer solchen Extrusion der im Bereich der Enden des Schlauchendstücks erzeugte Materialüberschuss vornehmlich an den axialen Wandabschnitten anlagert und dort zu einer größeren Wandstärke führt, während die Stärke der radialen Wandabschnitte im wesentlichen unverändert bleibt.

Das Schlauchstück ist mit Vorteil an seinen Anfangsbereich mittels eines Verschleißrings an dem Schutzschlauch endseitig befestigbar; ebenfalls mit Vorteil ist es an seinem dem Schutzschlauch abgewandten Ende mittels einer Schlauchschelle an dem Roboter bzw. an dem Roboterwerkzeug fixierbar.

Die Länge des Schlauchendstücks beträgt je nach Abmessungen des Roboters vorzugsweise zwischen 50 mm und 1000 mm, insbesondere zwischen 100 mm und 500 mm.

Während der Schutzschlauch aus dem üblichen harten, spröden und folglich verhältnismäßig formstabilen Material bestehen kann, besteht das flexible Schlauchendstück bevorzugt aus einem weicheren und verschleißfesten Material, so dass vornehmlich das Schlauchendstück zur Aufnahme der Bewegungen des Roboters dient.

Im übrigen betrifft die Erfindung auch ein Schlauchendstück für einen Schutzschlauch der vorgenannten Art sowie einen Roboter mit zumindest teilweise außenseitig verlaufenden Kabeln, welcher mit einem ein solches Schlauchendstück aufweisenden Schutzschlauch ausgestattet ist.

Nachstehend ist die Erfindung anhand bevorzugter Ausführungsformen unter Bezugnahme auf die Zeichnungen näher erläutert. Dabei zeigen:
- Fig.1: eine schematische Seitenansicht eines mit einem flexiblen Schlauchendstück versehenen Schutzschlauchs;
- Fig.2: eine Detailansicht des Ausschnitts II gemäß Fig. 1 der Wandung des Schlauchendstücks im Anfangsbereich;
- Fig.3: eine Detailansicht des Ausschnitts III gemäß Fig. 1 der Wandung des Schlauchstücks im Mittenbereich;
- Fig.4: eine Detailansicht einer alternativen Ausgestaltung der Wandung des Schlauchendstücks im Anfangsbereich;
- Fig.5: die Wandung des Schlauchendstücks gemäß Fig. 4 im Endbereich;
- Fig.6: eine schematische Seitenansicht einer anderen Ausführungsform eines flexiblen Schlauchendstücks;
- Fig. 7: eine Detailansicht des Ausschnitts VII gemäß Fig. 6 der Wandung des Schlauchendstücks im Anfangsbereich und
- Fig.8: eine Detailansicht des Ausschnitts VIII gemäß Fig. 6 der Wandung des Schlauchendstücks im Mittenbereich.

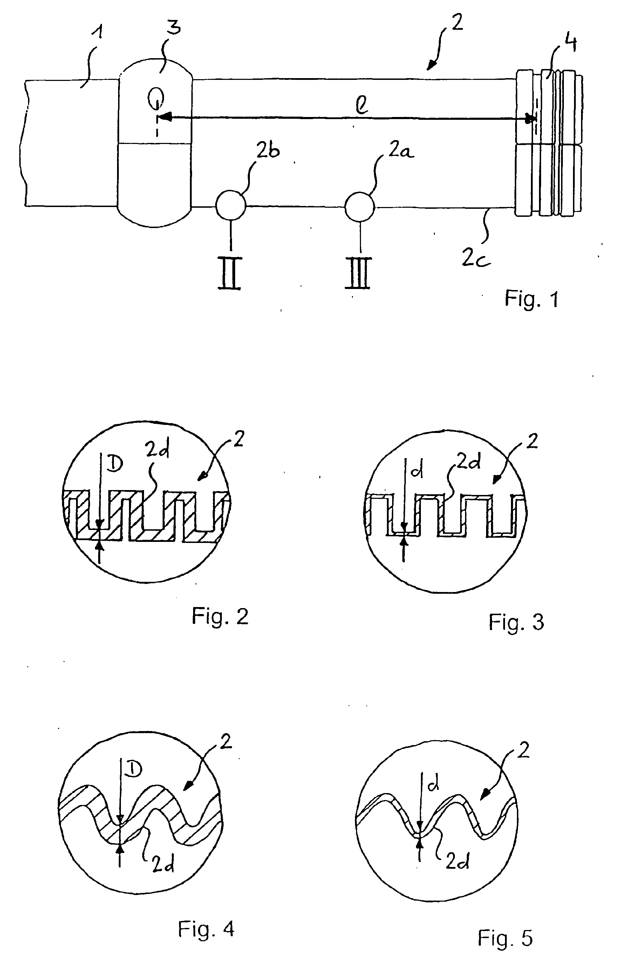

In Fig. 1 ist ein Schutzschlauch 1, wie ein Kabelführungsschlauch, für eine Roboter mit zumindest teilweise außenseitig verlaufenden Kabeln (nicht gezeigt) dargestellt. Der Schutzschlauch 1 besteht insbesondere aus einem verhältnismäßig formstabilen und harten Material, z. B. aus einem Polyamid. Der Schutzschlauch 1 ist an seinem einer Roboterhand (nicht dargestellt) zugewandten Anfangsbereich mit einem flexiblen Schlauchendstück 2 versehen, welches an seinem dem Schutzschlauch 1 zugewandten Anfangsbereich 2b mittels eines Verschleißrings 3 mit dem Schutzschlauch 1 stumpf verbunden ist. Das Schlauchendstück 2 ist an seinem dem Schutzschlauch 1 abgewandten bzw. der Roboterhand zugewandten Endbereich 2c wiederum mit einer Schlauchschelle 4 ausgestattet, um es auf einfacher Weise an ein Roboterwerkzeug anzukuppeln. Die Länge 1 des Schlauchendstücks 2 beträgt z. B. 200 bis 300 mm.

Wie aus Fig. 2 und 3 ersichtlich, verändert sich die Stärke der Wandung 2d des Schlauchendstücks 2 über seine Länge 1, wobei die Wandstärke d im Mittenbereich 2a des Schlauchendstücks (Fig. 3) geringer als die Wandstärke D in seinem Anfangsbereich 2b (Fig. 2) ist. Die Wandstärke D des Schlauchendstücks 2 in seinem Anfangsbereich 2b entspricht insbesondere etwa seiner Wandstärke im Endbereich 2c (nicht dargestellt), so dass es im wesentlichen symmetrisch ist. Die Wandstärke des Schlauchstücks 2 nimmt beispielsweise von seinem Anfangsbereich 2b zu seinem Mittenbereich 2a im wesentlichen kontinuierlich ab und von seinem Mittenbereich 2a zu seinem Endbereich 2c im wesentlichen kontinuierlich zu. In der gezeigten Ausführung ist die Wandung 2d des Schlauchendstücks 2 im wesentlichen rechteckförmig gewellt

Aufgrund der erfindungsgemäßen Ausgestaltung weist das flexible Schlauchendstück 2 sowohl an seinem Anfangs- 2b als auch an seinem Endbereich 2c eine höhere Steifigkeit als an seinem Mittenbereich 2a auf, so dass es sowohl an den Schutzschlauch 1 als auch an das Werkzeug gut ankuppelbar ist. Die im Mittenbereich 2a geringere Wandstärke d verleiht ihm eine hohe Flexibilität, ohne seine Gesamtfestigkeit zu beeinträchtigen, so dass der mit dem Schlauchendstück 2 versehene Schutzschlauch 1 von hoher Lebensdauer ist.

Das in Fig. 4 und 5 dargestellte Schlauchendstück 2 unterscheidet sich von dem Schlauchendstück gemäß Fig. 1 bis 3 dadurch, dass es eine im wesentlichen sinusförmig gewellte Wandung 2d aufweist. Alternativ kann beispielsweise auch eine im wesentlichen sägezahnförmige Wandung (nicht gezeigt) vorgesehen sein.

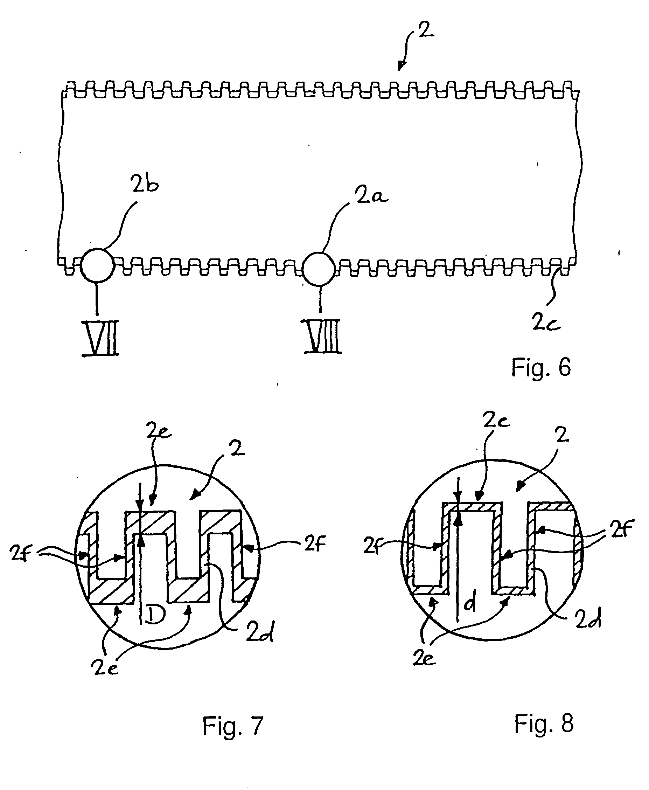

Der Fig. 6 ist ein (abgebrochen dargestelltes) Schlauchendstück 2 mit einer im wesentlichen rechteckförmig gewellten Wandung 2d zu entnehmen, dessen Wandstärke sich abschnittsweise über seine Länge ändert, wobei sich seine Wandstärke vornehmlich in den axial angeordneten Wandabschnitten 2e ändert, während sie in den radial angeordneten Wandabschnitten 2f im wesentlichen konstant bleibt (Fig. 7 und 8). Die Wandstärke d der axial angeordneten Wandabschnitte 2e des Schlauchendstücks 2 weist im Mittenbereich 2a ein Minimum auf und nimmt z. B. in Richtung des Anfangsbereichs 2b und des Endbereichs 2c des Schlauchstücks 2 kontinuierlich zu.

Das Schlauchendstück 2 besteht insbesondere aus einem verschleißfesten Material, welches weicher als das Material des Schutzschlauchs 1 ist. Es besteht beispielsweise aus einem extrudierten Kunststoff.

### Bezugszeichenliste

- 1: Schutzschlauch
- 2: Schlauchendstück
- 2a: Mittenbereich
- 2b: Anfangsbereich
- 2c: Endbereich
- 2d: Wandung
- 2e: axialer Wandabschnitt
- 2f: radialer Wandabschnitt
- 3: Verschleißring
- 4: Schlauchschelle
- d: Wandstärke im Mittenbereich
- D: Wandstärke im Anfangsbereich
- l: Länge des Schlauchendstücks

## Patentansprüche

1. Schlauchendstück für einen Schutzschlauch in Form eines Kabelführungsschlauchs für einen Roboter mit insbesondere Versorgungskabeln von Werkzeugen des Roboters, **gekennzeichnet durch** ein an dem Schutzschlauch (1) endseitig angeordnetes, flexibles Schlauchendstück (2), dessen Wandstärke sich zumindest abschnittsweise über seine Länge (1) derart ändert, dass seine Wandstärke (d) im Mittenbereich (2a) ein Minimum aufweist.

2. Schlauchendstück nach Anspruch 1, **dadurch gekennzeichnet, dass** die Wandstärke (D) des Schlauchendstücks (2) in seinem Anfangsbereich (2b) etwa der Wandstärke des Schutzschlauchs (1) entspricht.

3. Schlauchendstück nach Anspruch 1 oder 2, **dadurch gekennzeichnet, dass** die Wandstärke (D) des Schlauchendstücks (2) in seinem Anfangsbereich (2b) etwa der Wandstärke (D) in seinem Endbereich (2c) entspricht.

4. Schlauchendstück nach einem der Ansprüche 1 bis 3, **dadurch gekennzeichnet, dass** die Wandstärke des Schlauchendstücks (2) von seinem Anfangsbereich (2b) zu seinem Mittenbereich (2a) im wesentlichen kontinuierlich abnimmt und von seinem Mittenbereich (2a) zu seinem Endbereich (2c) im wesentlichen kontinuierlich zunimmt.

5. Schlauchendstück nach einem der Ansprüche 1 bis 3, **dadurch gekennzeichnet, dass** die Wandstärke des Schlauchendstücks (2) von seinem Anfangsbereich (2b) zu seinem Mittenbereich (2a) schrittweise abnimmt und von seinem Mittenbereich (2a) zu seinem Endbereich (2c) schrittweise zunimmt.

6. Schlauchendstück nach Anspruch 5, **dadurch gekennzeichnet, dass** das Schlauchendstück (2) aus aneinandergefügten Schlauchsegmenten mit unterschiedlicher Wandstärke besteht.

7. Schlauchendstück nach einem der Ansprüche 1 bis 6, **dadurch gekennzeichnet, dass** das Schlauchendstück (2) eine ring- oder wendelgewellte Wandung (2d) aufweist.

8. Schlauchendstück nach Anspruch 7, **dadurch gekennzeichnet, dass** die Wandung (2d) des Schlauchendstücks (2) im wesentlichen rechteckförmig gewellt ist.

9. Schlauchendstück nach Anspruch 7, **dadurch gekennzeichnet, dass** die Wandung (2d) des Schlauchendstücks (2) im wesentlichen sinusförmig gewellt ist.

10. Schlauchendstück nach Anspruch 7, **dadurch gekennzeichnet, dass** die Wandung (2d) des Schlauchendstücks (2) im wesentlichen sägezahnförmig gewellt ist.

11. Schlauchendstück nach einem der Ansprüche 7 bis 10, **dadurch gekennzeichnet, dass** die Wandstärke des ring- oder wendelgewellten Schlauchendstückes (2) sich vornehmlich in den im wesentlichen axial angeordneten Wandabschnitten (2e) ändert, während sie in dem im wesentlichen radial angeordneten Wandabschnitten (2f) im wesentlichen konstant bleibt.

12. Schlauchendstück nach einem der Ansprüche 1 bis 11, **dadurch gekennzeichnet, dass** das Schlauchendstück (2) mittels eines Verschleißrings (3) an dem Schutzschlauch (1) endseitig befestigbar ist.

13. Schlauchendstück nach einem der Ansprüche 1 bis 12, **dadurch gekennzeichnet, dass** das Schlauchendstück (2) endseitig über eine Schlauchschelle (4) an dem Roboter bzw. an dem Werkzeug fixierbar ist.

14. Schlauchendstück nach einem der Ansprüche 1 bis 13, **dadurch gekennzeichnet, dass** die Länge (1) des Schlauchendstücks (2) zwischen 50 mm und 1000 mm beträgt.

15. Schlauchendstück nach einem der Ansprüche 1 bis 14, **dadurch gekennzeichnet, dass** die Länge (1) des Schlauchendstücks (2) zwischen 100 mm und 500 mm beträgt.

16. Schlauchendstück nach einem der Ansprüche 1 bis 15, **dadurch gekennzeichnet, dass** das Schlauchendstück (2) aus einem weichen und verschleißfesten Material besteht.

## Claims

1. A tube end piece for a protective tube in the form of a cable guide tube for a robot with in particular supply cables for robot tools, **characterised by** a flexible tube end piece (2) arranged at the end of the protective tube (1), the wall thickness of which tube end piece (2) varies at least in places over its length (1) in such a way that its wall thickness (d) has a minimum value in the central area (2a).

2. A tube end piece according to claim 1, **characterised in that** the wall thickness (D) of the tube end piece (2) in the initial area (2b) thereof corresponds approximately to the wall thickness of the protective tube (1).

3. A tube end piece according to claim 1 or claim 2, **characterised in that** the wall thickness (D) of the tube end piece (2) in the initial area (2b) thereof corresponds approximately to the wall thickness (D) in the end area (2c) thereof.

4. A tube end piece according to any one of claims 1 to 3, **characterised in that** the wall thickness of the tube end piece (2) decreases substantially continuously from its initial area (2b) to its central area (2a) and increases substantially continuously from its central area (2a) to its end area (2c).

5. A tube end piece according to any one of claims 1 to 3, **characterised in that** the wall thickness of the tube end piece (2) decreases stepwise from its initial area (2b) to its central area (2a) and increases stepwise from its central area (2a) to its end area (2c) .

6. A tube end piece according to claim 5, **characterised in that** the tube end piece (2) consists of fitted-together tube segments of different wall thicknesses.

7. A tube end piece according to any one of claims 1 to 6, **characterised in that** the tube end piece (2) comprises an annularly or helically corrugated wall (2d).

8. A tube end piece according to claim 7, **characterised in that** the wall (2d) of the tube end piece (2) has substantially rectangular corrugations.

9. A tube end piece according to claim 7, **characterised in that** the wall (2d) of the tube end piece (2) has substantially sinusoidal corrugations.

10. A tube end piece according to claim 7, **characterised in that** the wall (2d) of the tube end piece (2) has substantially sawtooth-shaped corrugations.

11. A tube end piece according to any one of claims 7 to 10, **characterised in that** the wall thickness of the annularly or helically corrugated tube end piece (2) varies primarily in the substantially axially arranged wall portions (2e), while it remains substantially constant in the substantially radially arranged wall portions (2f).

12. A tube end piece according to any one of claims 1 to 11, **characterised in that** the tube end piece (2) may be attached at the end to the protective tube (1) by means of a wear ring (3).

13. A tube end piece according to any one of claims 1 to 12, **characterised in that** the tube end piece (2) may be fixed at the end to the robot or to the tool by means of a tube clip (4).

14. A tube end piece according to any one of claims 1 to 13, **characterised in that** the length (1) of the tube end piece (2) amounts to between 50 mm and 1000 mm.

15. A tube end piece according to any one of claims 1 to 14, **characterised in that** the length (1) of the tube end piece (2) amounts to between 100 mm and 500 mm.

16. A tube end piece according to any one of claims 1 to 15, **characterised in that** the tube end piece (2) consists of a soft, wear-resistant material.

## Revendications

1. Embout de tuyau de protection de type gaine de câbles pour un robot, comprenant notamment les câbles d'alimentation des outils du robot, **caractérisé par** un embout flexible (2) placé à l'extrémité de la gaine de la gaine de protection (1), et dont l'épaisseur de la paroi varie au moins de segment en segment sur toute sa longueur (1) de manière à ce que l'épaisseur de la paroi (d) arrive au minimum dans la zone du centre (2a).

2. Embout de tuyau flexible selon la revendication 1, **caractérisé en ce que** l'épaisseur de la paroi (D) de l'embout (2) soit à peu près égale, dans sa zone de début (2b) à l'épaisseur de la paroi de la gaine de protection (1).

3. Embout de tuyau flexible selon la revendication 1 ou 2, **caractérisé en ce que** l'épaisseur de la paroi (D) de l'embout (2) soit à peu près égale, dans sa zone de début (2b) à l'épaisseur de la paroi (D) dans sa zone terminale (2c).

4. Embout de tuyau flexible selon une des revendications 1 à 3, **caractérisé en ce que** l'épaisseur de la paroi de l'embout (2) diminue de manière essentiellement régulière depuis la zone de début (2b) vers la zone du milieu (2a) puis augmente de manière essentiellement régulière de la zone du milieu (2a) jusqu'à sa partie terminale (2c).

5. Embout de tuyau flexible selon une des revendications 1 à 3, **caractérisé en ce que** l'épaisseur de la paroi de l'embout (2) diminue pas à pas depuis la zone de début (2b) vers la zone du milieu (2a) puis augmente pas à pas de la zone du milieu (2a) jusqu'à sa partie terminale (2c).

6. Embout de tuyau flexible selon la revendication 5, **caractérisé en ce que** l'embout de tuyau flexible (2) est composé de plusieurs tronçons de tuyau juxtaposés les uns aux autres et présentant différentes épaisseurs de paroi.

7. Embout de tuyau flexible selon une des revendications 1 à 6, **caractérisé en ce que** l'embout de tuyau flexible (2) présente une paroi (2d) à ondulations annulaires ou hélicoïdales.

8. Embout de tuyau flexible selon la revendication 7, **caractérisé en ce que** la paroi (2d) de l'embout (2) présente une ondulation essentiellement rectangulaire.

9. Embout de tuyau flexible selon la revendication 7, **caractérisé en ce que** la paroi (2d) de l'embout (2) présente une ondulation essentiellement sinusoïdale.

10. Embout de tuyau flexible selon la revendication 7, **caractérisé en ce que** la paroi (2d) de l'embout (2) présente une ondulation essentiellement en dents de scie.

11. Embout de tuyau flexible selon une des revendications 7 à 10, **caractérisé en ce que** l'épaisseur de la paroi de l'embout (2) ondulé de façon annulaire ou hélicoïdale varie dans les sections (2e) principalement axiales, tandis qu'elle reste essentiellement constante dans les sections (2f) principalement radiales.

12. Embout de tuyau flexible selon une des revendications 1 à 11, **caractérisé en ce que** l'embout (2) peut être fixé côté extrémité à l'aide d'une bague d'usure (3) sur la gaine de protection (1).

13. Embout de tuyau flexible selon une des revendications 1 à 12, **caractérisé en ce que** l'embout (2) peut être fixé côté extrémité à l'aide d'un collier de serrage (4) sur le robot ou sur l'outil.

14. Embout de tuyau flexible selon une des revendications 1 à 13, **caractérisé en ce que** la longueur (1) de l'embout (2) est comprise entre 50 mm et 1000 mm.

15. Embout de tuyau flexible selon une des revendications 1 à 14, **caractérisé en ce que** la longueur (1) de l'embout (2) est comprise entre 100 mm et 500 mm.

16. Embout de tuyau flexible selon une des revendications 1 à 15, **caractérisé en ce que** l'embout (2) est formé d'un matériau souple et résistant à l'usure.
